# EUROPEAN PATENT SPECIFICATION

(11) **EP 1 808 423 B1**
(45) Date of publication and mention of the grant of the patent: **03.08.2011**
(21) Application number: 05785610.6
(22) Date of filing: 22.09.2005
(51) Int. Cl.: C04B 35/64, C04B 35/195, F27D 3/12

(54) **SETTER USED IN FIRING AND METHOD FOR FIRING OF FORMED HONEYCOMB BODY USING THE SETTER**
TRÄGERPLATTE ZUR VERWENDUNG BEIM BRENNEN UND BRENNVERFAHREN FÜR GEFORMTE WABENFORMKÖRPER UNTER VERWEDNUNG DER TRÄGERPLATTE
PLAQUE DE SUPPORT POUR UTILISATION DANS LE CHAUFFAGE ET PROCÉDÉ DE CHAUFFAGE DES ARTICLES EN NID D'ABEILLES UTILISANT LADITTE PLAQUE

(30) Priority: 27.09.2004 JP 2004279669
(43) Date of publication of application: 18.07.2007
(73) Proprietor: NGK Insulators, Ltd., Nagoya-shi, Aichi 467-8530 (JP)
(72) Inventor: NOGUCHI, Yasushi c/o NGK INSULATORS, LTD., Nagoya-shi, Aichi 4678530 (JP); SUENOBU, Hiroyuki c/o NGK INSULATORS, LTD., Nagoya-shi, Aichi 4678530 (JP); NAKAMURA, Tomoo c/o NGK INSULATORS, LTD., Nagoya-shi, Aichi 4678530 (JP); WATANABE, Takehiko c/o NGK INSULATORS, LTD., Nagoya-shi, Aichi 4678530 (JP)
(74) Representative: Paget, Hugh Charles Edward
(86) International application number: PCT/JP2005/017497
(87) International publication number: WO 2006/035674

(56) References cited:
- EP-A- 0 449 534
- EP-A- 0 639 436
- WO-A1-94/17972
- JP-A- 5 026 585
- JP-A- 5 178 672
- JP-A- 02 086 187
- JP-A- 02 107 573
- JP-A- 03 279 267
- JP-A- 62 202 870
- JP-A- 2003 082 403
- US-A- 4 786 542
- US-A- 5 316 710
- US-A1- 2002 042 037

## Description

### Technical Field

The present invention relates to a setter used in firing and a method for firing of a formed honeycomb body using the setter.

### Background Art

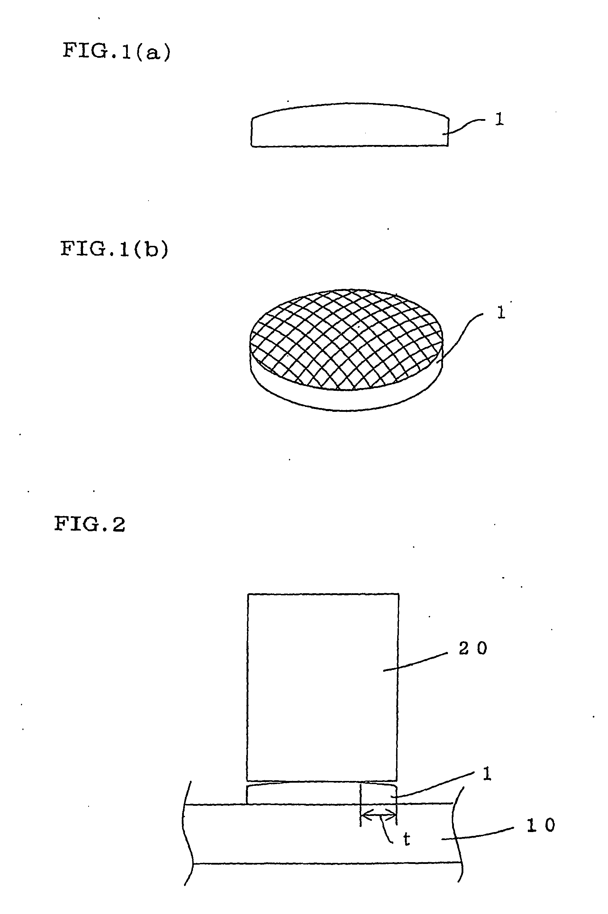

In firing, for example, a formed honeycomb body (a ceramic honeycomb structure) which is a green body, it has been a general practice, for example, to place a setter on a refractory slab 10 and mount thereon a formed honeycomb body 20, as shown in Fig. 2, and conduct firing in a tunnel furnace or a periodical kiln. In this case, however, the formed honeycomb body receives, in the firing step, firing shrinkage and thermal expansion and, in the contact surface between the formed ceramic body and the setter, a friction is generated by the difference in firing shrinkage and thermal expansion between the formed ceramic body and the setter. This friction has caused a problem in that the formed honeycomb body after firing (the fired honeycomb body) has cracks at the contact surface or, even if no crack is generated, it is impossible to obtain a desired shrinkage at the contact surface and the formed honeycomb body after firing (the fired honeycomb body) is deformed.

In order to alleviate the above problem, there has been used, as a setter used in firing of a formed honeycomb body of large firing shrinkage, a formed material or fired material made of the same green body as for the formed honeycomb body to be fired, or a setter produced by slicing the formed honeycomb body into a given thickness and subjecting it to chamfering.

When there is used, as a setter, particularly one made of the same green body as for the formed honeycomb body, the setter shows, in firing, the same expansion and shrinkage as the formed honeycomb body; therefore, there can be prevented the generation of crack by firing, cell-deformation, cracking or deformation, all caused by the mismatching of expansion and shrinkage between the formed honeycomb body and the setter. Further, use of such a setter has provided an advantage that there is no undesired reaction which occurs by infiltration of heterogeneous composition into formed honeycomb body after firing (fired honeycomb body) and resultant contamination of fired honeycomb body.

When there is used a setter made of the same green body as for the formed honeycomb body, however, the formed honeycomb body and the setter stick to each other during sintering and, in the subsequent firing or cooling or in peeling of the formed honeycomb body after firing (the fired honeycomb body) from the setter which has sticked thereto, the fired honeycomb body (which is a product) has generated cell defects or lack of cells in some cases.

The present invention has been made in view of the above-mentioned problems of prior art. Described herein are:
a setter used in firing, which can strikingly reduce the sticking between the setter and a fired honeycomb body (a product) and accordingly can produce a product free from cell defects or lack of cells and also free from the crack by firing, cell-deformation, cracking, deformation or undesired reaction, all caused by the mismatching of expansion and shrinkage between the setter and a material to be fired together with the setter, and which can prevent a reduction in yield in production of a fired honeycomb body (a product), and
a method for firing of a formed honeycomb body using the setter.

### Disclosure of the Invention

In order to achieve the above aim, the presentinvention provides a combination of a setter used in firing and a to-be-fired body, and a method for firing of a formed honeycomb body using the setter.

According to the present invention, there is provided a combination as set out in claim 1. The setter used in firing, which, when fired, forms a crystalline phase comprising the same main component as in the crystalline phase formed when a to-be-fired body is fired together with the setter has a surface roughness Ra of 8 to 50 µm at the surface to come in contact with the to-be-fired body.

The setter used in firing is preferably constituted by a formed ceramic body of honeycomb structure having an opening ratio of 50 to 90%.

In the setter used in firing it is preferred that the crystalline phase formed when fired together with the to-be-fired body comprises, as the main component, any of (1) cordierite 85 to 100 mass %, (2) silicon carbide 50 to 100 mass % and (3) aluminum titanate 50 to 100 mass %.

The setter used in firing preferably has a porosity of 20 to 70% when fired together with the to-be-fired body.

The setter used in firing is preferred to satisfy at least one of the following conditions (1) to (3).
(1) The present setter has a diameter equal to the diameter of the to-be-fired body plus or minus 10% thereof and a thickness of 5 to 50 mm.
(2) The present setter is chamfered by a distance of 3 to 30 mm at the periphery of the surface to come into contact with the to-be-fired body, in a direction from the periphery toward the center of the surface.
(3) The to-be-fired body has a shape of 140 to 400 mm in diameter and 150 to 400 mm in height.

According to the present invention, there is also provided a method for firing of a formed honeycomb body using the above-mentioned setter used in firing.

### Brief Description of the Drawings

Fig. 1(a) is a key portion sectional view showing a setter used in firing.
Fig. 1(b) is a schematic perspective view showing a setter used in firing.
Fig. 2 shows a state in which a refractory slab, a setter used in firing, and a formed honeycomb body have been arranged for firing of the formed honeycomb body.

### Explanation of Symbols

1 is a setter used in firing 10 is a refractory slab; and 20 is a formed honeycomb body.

### Best Mode for Carrying Out the Invention

In-depth description is made below on the setter used in firing and the method for firing a formed honeycomb body using the setter. However, the present invention should not be construed to be restricted thereto, and there can be added various changes, modifications and improvements based on the knowledge possessed by those skilled in the art as long as there is no deviation from the scope of the present invention.

Fig. 1(a) is a key portion sectional view showing a setter used in firing; Fig. 1(b) is a schematic perspective view showing a setter used in firing; and Fig. 2 shows a state in which a refractory slab, a setter used in firing, and a formed honeycomb body have been arranged for firing of the formed honeycomb body.

The main characteristics of the setter used in firing, of the present invention lie in that the setter, when fired, forma a crystalline phase comprising the same main component as in the crystalline phase formed when a to-be-fired body is fired together with the setter and that the setter has a surface roughness Ra of 8 to 50 µm, preferably 10 to 30µm at the surface to come in contact with the to-be-firmed material [reference is made to Figs. 1(a) and 1(b)].

The reason is as follows. When the setter has a surface roughness Ra of less than 8 µm at the surface to come in contact with the to-be-firmed material (formed honeycomb body), the fired honeycomb body (product) sticks to the setter in peeling of fired honeycomb body (product) from setter, making large the damage (in particular, rib breakage) of fired honeycomb body (product). Meanwhile, when the setter has a surface roughness Ra of more than 50 µm at the surface to come in contact with the to-be-firmed material (formed honeycomb body), the fired honeycomb body (product) has a rough surface at the end surface being in contact with the setter.

Thereby, the sticking between the present setter used in firing and the fired honeycomb body (product) can be reduced greatly; as a result, the present setter can produce a fired honeycomb body (product) which is free from cell defects or lack of cells and also free from the crack by firing, cell-deformation, cracking, deformation or undesired reaction, all caused by the mismatching of expansion and shrinkage between the setter and the material to be fired together with the setter, and can prevent a reduction in yield in production of a fired honeycomb body (product).

Here, in the present setter used in firing, it is preferred that the crystalline phase formed when fired comprises the same main component as in the crystalline phase formed when the to-be-fired body (formed honeycomb body) is fired together with the setter and that the present setter is constituted by a formed ceramic body of honeycomb structure having an opening ratio of 50 to 90%, preferably 55 to 85%. The reason is as follows. When the opening ratio of the setter is less than 50%, the fired honeycomb body obtained as a product sticks to the setter when the former is removed from the latter, and the lower end face of the fired honeycomb body (product) is broken partially. Meanwhile, when the opening ratio of the setter is more than 90%, the setter is low in strength and is broken to pieces when the fired honeycomb body (product) is separated from the setter; therefore, there become necessary the removal (by polishing) of fragments sticking to the lower end face of fired honeycomb body (product) and the cleaning of kiln inside, resulting in reduced productivity.

Incidentally, the opening ratio is indicated by A/Sx100 when the sectional area of honeycomb structure in a direction perpendicular to the flow path is taken as S and the area of openings in the sectional area is taken as A.

In the present setter used in firing, it is further preferred that the crystalline phase formed when fired together with the to-be-fired body (formed honeycomb body) comprises, as the main component, any of (1) cordierite 85 to 100 mass %, (2) silicon carbide 50 to 100 mass % and (3) aluminum titanate 50 to 100 mass %. The reason is as follows. By allowing the crystalline phase formed when the setter has been fired, to comprise the same main component as in the crystalline phase of fired honeycomb body (product), there can be prevented the generation of crack by firing, cell-deformation, cracking or deformation, all caused by the mismatching of expansion and shrinkage between the setter and the to-be-fired body and there can also be prevented the generation of undesired reaction which is caused by penetration of heterogeneous composition into formed honeycomb body after firing (i.e. fired honeycomb body) and resultant contamination.

It is also preferred that the present setter used in firing has a porosity of 20 to 70% when fired together with the to-be-fired body (i.e. formed honeycomb body). The reason is as follows. When the porosity of the setter is less than 20%, the fired honeycomb body (product) tends to stick to the setter. Meanwhile, when the porosity of the setter is more than 70%, the fired honeycomb body (product) is unlikely to stick to the setter; however, the setter is low in strength and is broken to pieces when the fired honeycomb body (product) is separated from the setter, which necessitates the removal (by polishing) of fragments sticking to the lower end face of fired honeycomb body (product) and the cleaning of kiln inside, resulting in reduced productivity.

It is further preferred that the present setter used in firing has a diameter equal to the diameter of the to-be-fired body (i.e. formed honeycomb body) plus or minus 10% thereof and a thickness of 5 to 50 mm, preferably 10 to 40 mm. The reason is as follows. When the diameter of the setter is more than "a diameter equal to the diameter of the to-be-fired body (i.e. formed honeycomb body) plus 10% thereof", the number of to-be-fired bodies settable in kiln is smaller, resulting in reduced productivity. Meanwhile, when the diameter of the setter is less than "a diameter equal to the diameter of the to-be-fired body (i.e. formed honeycomb body) minus 10% thereof", the formed honeycomb body is not in contact with the setter and accordingly the lower end face of the honeycomb structure after firing (product) sags. When the thickness of the setter is more than 50 mm, the heat generated during binder combustion is large, generating cracks inside the fired honeycomb body (product). Meanwhile, when the thickness of the setter is less than 5 mm, the setter is low in strength, which makes the setter easy to break and requires the cleaning of kiln inside in taking out the product from the kiln.

It is furthermore preferred that the present setter used in firing is chamfered by a distance of 3 to 30 mm, preferably 5 to 20 mm at the periphery of the surface to come into contact with the to-be-fired body (i.e. formed honeycomb body), in a direction from the periphery toward the center of the surface (reference is made to "t" of Fig. 2). The reason is as follows. When the distance of chamfering is less than 3 mm, the cells at the outermost portion of honeycomb structure after firing (product) are deformed. Meanwhile, when the distance of chamfering is more than 30 mm, the formed honeycomb body is not in contact with the setter and therefore the lower end face of the honeycomb structure after firing (product) sags.

Incidentally, the present setter can be preferably used in firing of a to-be-fired body (i.e. a formed honeycomb body) having a shape of 140 to 400 mm in diameter and 150 to 400 mm in height.

The present invention is described in more detail by way of Examples. However, the present invention is in no way restricted to these Examples.

### (Measurement methods)

### (1) Surface roughness Ra

Using a surface roughness tester (Model FTS-S4C, a product of TAILER HOBSON LTD.), the stylus of 2 µm R at the front end was allowed to contact with the surface of a sample setter to come in contact with a product, at a front end angle of 90° over a length of 2.5 mm, and the surface roughness Ra of the sample setter was obtained from the examined profile of the above surface. The surface roughness Ra in the present invention was calculated from the average of the above measurements for ten locations.

### (2) Opening ratio

The rib thickness and cell pitch of test sample were measured at 20 locations using an optical microscope and were each calculated for average. An opening area per cell was calculated from the averages, and an opening ratio was calculated.

### (3) Porosity

A test sample was measured for total pore volume using a mercury porosimeter (a product of MICROMELITICS LTD.). From this total pore volume and the true specific gravity (2.52 g/cc) of cordierite was calculated a porosity of the test sample.

### (Examples 1-13 and Comparative Examples 1∼3)

There were mixed talc (average particle diameter: 25 µm), kaolin (average particle diameter: 5 µm), alumina (average particle diameter: 5 µm), aluminum hydroxide (average particle diameter: 5 µm) and fused silica (average particle diameter: 30 µm) at proportions of talc 40 mass %, kaolin 20 mass %, alumina 15 mass %, aluminum hydroxide 15 mass % and fused silica 10 mass %, to prepare raw materials for cordierite formation (see Table 1).

Into a kneader were placed, as shown in Table 1, 100 parts by weight of one of the above-prepared raw materials for cordierite formation, a given amount of a foamed resin made of an acrylonitrile-methyl methacrylate copolymer, a given amount of a binder (hydroxypropyl methyl cellulose) and a given amount of a surfactant (potassium laurate soap), followed by kneading, to obtain plastic raw materials (batch Nos. 1 to 3). Each plastic raw material was formed into a cylindrical puddle using a vacuum pug mill and the puddle was fed into an extruder to obtain formed honeycomb bodies each having a diameter (setter diameter) shown in Table 2.

**Table 1**

| Batch No. | Raw materials for cordierite formation | | | | | Foamed resin | Binder | Surfactant | Water |
|---|---|---|---|---|---|---|---|---|---|
| | Talc | Kaolin | Alumina | Aluminium hydroxide | Fused silica | | | | |
| 1 | 40 (25 µm) | 20 (5 µm) | 15 (5 µm) | 15 (5 µm) | 10 (30 µm) | 1. 5 (40 µm) | 6 | 0.2 | 33.5 |
| 2 | 40 (25 µm) | 20 (5 µm) | 15 (5 µm) | 15 (5 µm) | 10 (30 µm) | 2. 0 (40 µm) | 6 | 0.2 | 34.0 |
| 3 | 40 (25 µm) | 20 (5 µm) | 15 (5 µm) | 15 (5 µm) | 10 (30 µm) | 2. 5 (40 µm) | 6 | 0.2 | 35.0 |

| | | | | | | | | | |
|---|---|---|---|---|---|---|---|---|---|
| [Unit=mass%] 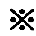 The figure inside each parenthesis ( ) indicates an average particle diameter of each raw material. | | | | | | | | | |

Each formed honeycomb body obtained was subjected to dielectric drying and then to hot-air drying to absolute dryness, after which the dried formed honeycomb body was cut in parallel in a thickness (setter thickness) shown in Table 2, using a two blade metal-bonded abrasive. Of the two cut surfaces, the surface to come in contact with a formed honeycomb body (a to-be-fired body) was subjected to a finishing operation using a sand paper shown in Table 2; then, the resulting material was chamfered (R chamfering) at the periphery (see "t" of Fig. 2) using an abrasive, as shown in Table 2, to produce individual setters used in firing [see Figs. 1(a) and 1(b)] (Examples 1 to 13 and Comparative Examples 1 to 3).

Separately, using slurries each made of a raw material for cordierite formation, of the same composition, there were prepared cylindrical formed honeycomb bodies (to-be-fired bodies) (batch Nos. 1 to 3) which had through-holes (cells) each plugged at either one end so that each end face of the formed honeycomb body looked checkered.

Next, as shown in Fig. 2, a setter 1 was placed on a refractory slab 10 and a formed honeycomb body 20 was mounted thereon. Then, firing was conducted at the maximum temperature of 1,420°C for 5 hours to obtain, from each formed honeycomb body, ten honeycomb structures (products) of 280 mm (diameter), 305 mm (length), 300 µm (rib thickness) and 1.47 mm (cell pitch) [300 cells/in.² (cell number)](Examples 1 to 13 and Comparative Examples 1 to 3). Each honeycomb structure (product) was evaluated. The results are shown in Table 2.

**Table 2**

| | Batch No. | sand paper treatment | Surface roughness Ra (µ m) | Rib thickness (µ m) | Call pitch ch (mm) | Opening ratio (%) | Porosity after firing (%) | Setter diameter (mm) | Setter thickness (mm) | Chamfering (R) distance of setter | Number of products which caused rib defects | Condition of product end face | Special commant |
|---|---|---|---|---|---|---|---|---|---|---|---|---|---|
| Example 1 | 1 | #400 | 8.3 | 300 | 1.47 | 63 | 68 | 280 | 20 | Peripheral portion 10mm | 0 | Very good | - |
| Example 2 | 1 | #200 | 10.5 | 300 | 1.47 | 63 | 68 | 280 | 20 | Peripheral portion 10mm | 0 | Very good | - |
| Example 3 | 1 | #80 | 12.8 | 300 | 1.47 | 63 | 68 | 280 | 20 | Peripheral portion 10mm | 0 | Very good | - |
| Example 4 | 2 | #400 | 8.4 | 300 | 1.47 | 63 | 66 | 280 | 20 | Peripheral portion 10mm | 0 | Very good | - |
| Example 5 | 3 | #400 | 8.3 | 300 | 1.47 | 63 | 72 | 280 | 20 | Peripheral portion 10mm | 0 | Good | A large number of small fragments of setter sticked to the product. |
| Example 6 | 1 | #400 | 8.3 | 380 | 1.47 | 55 | 58 | 280 | 20 | Peripheral portion 10mm | 0 | Very good | - |
| Example 7 | 1 | #400 | 8.3 | 550 | 1.80 | 48 | 58 | 280 | 20 | Peripheral portion 10mm | 0 | Very good | The area of sticking between setter and product was large. A longer time was needed for separation of setter from A longer time was needed for separation of setter from product. |
| Example 8 | 1 | #400 | 8.3 | 300 | 1.47 | 63 | 58 | 240 | 20 | Peripheral portion 10mm | 0 | Good | The portion of product and face not in contact with setter sagged. |
| Example 9 | 1 | #400 | 8.3 | 300 | 1.47 | 63 | 58 | 320 | 20 | Peripheral portion 10mm | 0 | Very good | The number of setting was smaller. |
| * Example 10 | 1 | #400 | 8.3 | 900 | 1.47 | 63 | 58 | 280 | 3 | Peripheral portion 10mm | 0 | Very good | The setter had been broken when the product was taken out from the kiln, which necessitated the cleaning of kiln inside. |
| * Example 11 | 1 | #400 | 8.3 | 300 | 1.41 | 63 | 58 | 280 | 60 | Peripheral portion 10mm | 0 | Very good | There were four inside defects. |
| Example 12 | 1 | #400 | 8.3 | 300 | 1.47 | 63 | 58 | 280 | 20 | No confering | 0 | Good | The product had cell deformation at the outermost portion. |
| Example 13 | 1 | #400 | 8.3 | 300 | 1.47 | 63 | 58 | 280 | 20 | Peripheral portion 50mm | 0 | Good | Good The portion of product end face not in contact with setter |
| Comparative Example 1 | 1 | #1000 | 7.5 | 300 | 1.47 | 63 | 58 | 280 | 20 | Peripheral portion 10mm | 7 | Bad | Bad The area of sticking between setter and product was large. The area of sticking between setter and product was large. |
| Comparative Example 2 | 1 | #2000 | 6.4 | 300 | 1.41 | 63 | 58 | 280 | 20 | Peripheral portion 10mm | 10 | Bad | A longer time was needed for separation of setter from |
| Comparative Example 3 | 1 | #24 (Abrasive treatment) | 54.7 | 300 | 1.47 | 63 | 58 | 280 | 20 | Peripheral portion 10mm | 0 | Bad | The end face of product was rough. The end face of product was rough. |

In Table 2, * denotes a reference example.

### (Discussion: Examples 1-13 and Comparative Examples 1∼3)

As is clear from the results of Table 2, in Examples 1 to 4 and Example 6, the condition of the honeycomb structure (product) at the surface being in contact with the setter, i.e. the condition of the lower end face of product was good and there was no problem.

Meanwhile, in Example 5, the honeycomb structure (product) had neither crack nor breakage and showed no problem in actual use. However, since the setter had a large porosity, a large number of fragments of the setter sticked to the lower end face of the honeycomb structure, which necessitated polishing of the lower end face of the honeycomb structure with a sand paper.

In Example 7, the honeycomb structure (product) had neither crack nor breakage and its condition at the surface being in contact with the setter, i.e. its condition at lower end face was good. However, the setter had a small opening ratio, its contact area with the product was large, and the area of the sticking between the setter and the product was large; therefore, a longer time than usual was needed for separation of the product from the setter.

In each of Example 8 and Example 9, the honeycomb structure (product) had neither crack nor breakage and its condition at the surface being in contact with the setter, i.e. its condition at lower end face was good. However, in Example 8, since the setter had a smaller diameter than the honeycomb structure (Product), the lower end face of the honeycomb structure (product) sagged; in Example 9, since the setter had too large a diameter, the number of to-be-fired bodies settable in kiln decreased, resulting in reduced productivity.

[0043] In reference Example 10, the honeycomb structure (product) had neither crack nor breakage and its condition at the surface being in contact with the setter, i.e. its condition at lower end face was good. However, since the setter had too small a thickness and showed cracking in taking-out of product from kiln, the cleaning of kiln inside was necessary. In reference Example 11, the surface (lower end face) condition of the honeycomb structure (product) was good and the lower end face had neither crack nor breakage; however, since the setter had too large a thickness, four of the ten honeycomb structures (products) had interior cracks generated during firing.

In each of Example 12 and Example 13, the honeycomb structure (product) had neither crack nor breakage and showed no problem in actual use. However, in Example 12, the outermost cells of the honeycomb structure (product) deformed; in Example 13, since the setter had too large a chamfered portion and the formed honeycomb body was not in contact with the setter, the lower end face of the honeycomb structure after firing (product) sagged.

In each of Comparative Example 1 and Comparative Example 2, since the surface roughness Ra of the setter was less than 8 µ m, the condition of the honeycomb structure (product) at the surface being in contact with the setter, i.e. the condition of the lower end face of product was outside the allowable range, the honeycomb structure (product) showed rib cracks, and the sticking between the setter and the product was seen in many places.

In Comparative Example 3, the setter had a surface roughness Ra of larger than 50 µm; therefore, the condition of the honeycomb structure (product) at the surface being in contact with the setter, i.e. the condition of the lower end face of product was outside the allowable range, and the lower end face of the honeycomb structure (product) was rough in an extent that the roughness could be confirmed visually.

### (Examples 14-22 and Comparative Examples 4∼5)

To a silicon carbide powder was added an organic binder (methyl cellulose and hydroxypropyl methyl cellulose). Thereto were added a surfactant and water to prepare plastic puddles. The plastic puddles were extruded to obtain formed materials of honeycomb structure.

Each formed honeycomb body was subjected to dielectric drying and then to hot-air drying to absolute dryness. The resulting material was cut in parallel in a thickness (setter thickness) shown in Table 3, using a two blade metal-bonded abrasive. Of the two cut surfaces, the surface to come in contact with a formed honeycomb body (a to-be-fired body) was subjected to a finishing operation using a sand paper shown in Table 3; then, the resulting material was chamfered (R chamfering) at the periphery (see "t" of Fig. 2) using an abrasive, as shown in Table 2, to produce individual setters used in firing [see Figs. 1(a) and 1(b)] (Examples 14 to 22 and Comparative Examples 4 and 5).

Separately, using slurries of the same compositions, there were prepared cylindrical formed honeycomb silicon carbide materials (to-be-fired bodies) which had through-holes (cells) each plugged at either one end so that each end face of the formed honeycomb body looked checkered.

Next, as shown in Fig. 2, a setter 1 was placed on a refractory slab 10 and a formed honeycomb body 20 was mounted thereon. Then, firing was conducted at the maximum temperature of 1,420°C for 5 hours to obtain, from each formed honeycomb body, ten honeycomb structures (products) of 280 mm (diameter), 305 mm (length), 300 µm (rib thickness) and 1.47 mm (cell pitch) [300 cells/in.² (cell number)] (Examples 14 to 22 and Comparative Examples 1 to 3). Each honeycomb silicon carbide structure (product) was evaluated. The results are shown in Table 3.

**Table 3**

| | Sand paper treatment | Surface roughness Ra (µ m) | Rib thickness (µ m) | Cell pitch (mm) | Opening ratio (%) | Porosity after firing (%) | Setter diameter (mm) | Setter thickness | Chamfering (R) distance of (mm) setter caused setter | Number of products which rib defects | Condition of product end face | Special comment |
|---|---|---|---|---|---|---|---|---|---|---|---|---|
| Example 14 | #400 | 8.5 | 550 | 1.80 | 48 | 58 | 280 | 20 | Peripheral portion 10mm | 0 | Good | The sticking between product and setter was seen product |
| Example 15 | #400 | 8.5 | 300 | 1.47 | 63 | 58 | 280 | 20 | Peripheral portion 10mm | 0 | Very good | - |
| Example 16 | #80 | 12.9 | 300 | 1.47 | 63 | 58 | 280 | 20 | Peripheral Portion 10mm | 0 | Very good | - |
| Example 17 | #400 | 8.5 | 300 | 1.47 | 63 | 58 | 240 | 20 | Peripheral portion 10mm | 0 | | The portion of product end face not in contact with setter face sagged. |
| Example 18 | #400 | 8.5 | 300 | 1.47 | 63 | 58 | 320 | 20 | Peripheral portion 10mm | 0 | Very The Very good | number of setting was smaller. |
| * Example 19 | #400 | 8.5 | 300 | 1.47 | 63 | 58 | 280 | 3 | Peripheral portion 10mm | 0 | Very good | - |
| * Example 20 | #400 | 8.5 | 300 | 1.47 | 63 | 58 | 280 | 60 | Peripheral portion 10mm | 0 | Very good Very good | - |
| Example 21 | #400 | 8.5 | 300 | 1.47 | 63 | 58 | 280 | 20 | No confering | 0 | Good | The product had cell deformation at the outermost portion. |
| Example 22 | #400 | 8.5 | 300 | 1.47 | 63 | 58 | 280 | 20 | Peripheral portion 50mm | 0 | Good | The portion of product end face not in contact with setter sagged. |
| Comparative Example 4 | #1000 | 7.4 | 300 | 1.47 | 63 | 58 | 280 | 20 | Peripheral portion 10mm | 5 | Bad | The sticking between setter and product was seen in many product was seen in many places. |
| Comparative Example 5 | #24 | 54.5 | 300 | 1.47 | 63 | 58 | 280 | 280 | Peripheral portion 10mm | 0 | Bad | The end face of product was rough. |

In Table 3, * denotes a reference example_{.}

### (Discussion: Examples 14-22 and Comparative Examples 4∼5)

As is clear from the results of Table 3, in Example 14, the condition of the honeycomb structure (product) at the surface being in contact with the setter, i.e. its condition at lower end face was acceptable; however, the setter had a small opening ratio, its contact area with the product was large, and the sticking between the setter and the product was seen slightly.

Meanwhile, in each of Example 15 and Example 16, the condition of the honeycomb structure (product) at the surface being in contact with the setter was good. In Example 16, in particular, the surface roughness was inferior to Example 15 but there was no problem.

In Example 17, the condition of the honeycomb structure (product) at the surface being in contact with the setter, i.e. its condition at lower end face was acceptable; however, since the setter had a diameter smaller than the honeycomb structure (product), the lower end face of the honeycomb structure sagged. In Example 18, the condition of the honeycomb structure (product) at the surface being in contact with the setter, i.e. its condition at lower end face was good; however, since the setter had too large a diameter, the number of to-be-fired bodies settable in kiln was smaller, resulting in reduced productivity.

In each of reference Example 19 and reference Example 20, the condition of the honeycomb structure (product) at the surface being in contact with the setter, i.e. its condition at lower end face was good when the thickness of setter was in a range of 3 to 60 mm, and there was no problem.

In each of Example 21 and Example 22, the condition of the honeycomb structure (product) at the surface being in contact with the setter, i.e. its condition at lower end face was acceptable. However, in Example 21, since no chamfering was made for the setter, the outermost cells of the honeycomb structure (product) deformed; in Example 22, since the chamfering portion of the setter was too large and the formed honeycomb body was not in contact with the setter, the lower end face of the honeycomb structure after firing (product) sagged.

In Comparative Example 4, the surface roughness Ra of the setter was less than 8 µm; therefore, the condition of the honeycomb structure (product) at the surface being in contact with the setter, i.e. the condition of the lower end face of product was outside the allowable range, the honeycomb structure (product) showed rib cracks, and the sticking between the setter and the product was seen in may places.

In Comparative Example 5, the setter had a surface roughness Ra of larger than 50 µm; therefore, the condition of the honeycomb structure (product) at the surface being in contact with the setter, i.e. the condition of the lower end face of product was outside the allowable range, and the lower end face of the honeycomb structure (product) was rough in an extent that the roughness could be confirmed visually.

### (Examples 23-31 and Comparative Examples 6∼7)

There were mixed α-alumina (average particle diameter: 5.0 µm, BET specific surface area: 0.8 m²/g), boehmite (average particle diameter: 0.1 µm, BET specific surface area: 163 m²/g), titanium oxide (average particle diameter: 0.2 µm) and high-purity kaolin (average particle diameter: 3 µm) to prepare raw materials for aluminum titanate (AT) formation. To 100 parts by mass of each raw material for AT formation was added 1.5 parts by mass of an organic binder (methyl cellulose and hydroxypropyl methyl cellulose). They were mixed and degassed in vacuum. The resulting mixture was cast in a gypsum form to obtain formed materials.

Each formed honeycomb body obtained was subjected to dielectric drying and then to hot-air drying to absolute dryness. The resulting material was cut in parallel in a thickness (setter thickness) shown in Table 4, using a two blade metal-bonded abrasive. Of the two cut surfaces, the surface to come in contact with a formed honeycomb body (a to-be-fired body) was subjected to a finishing operation using a sand paper shown in Table 4; then, the resulting material was chamfered (R chamfering) at the periphery (see "t" of Fig. 2) using an abrasive, as shown in Table 4, to produce individual setters used in firing [see Figs. 1(a) and 1(b)] (Examples 23 to 31 and Comparative Examples 6 and 7).

Separately, using slurries of the same compositions, there were prepared cylindrical formed honeycomb aluminum titanate materials (to-be-fired bodies) which had through-holes (cells) each plugged at either one end so that each end face of the formed honeycomb body looked checkered.

Next, as shown in Fig. 2, a setter 1 was placed on a refractory slab 10 and a formed honeycomb body 20 was mounted thereon. Then, firing was conducted at the maximum temperature of 1,420°C for 5 hours to obtain, from each formed honeycomb body, ten honeycomb structures (products) of 280 mm (diameter), 305 mm (length), 300 µm (rib thickness) and 1.47 mm (cell pitch) [300 cells/in.² (cell number)] (Examples 14 to 22 and Comparative Examples 1 to 3). Each honeycomb aluminum titanate structure (product) was evaluated. The results are shown in Table 4.

**Table 4**

| | Sand paper treatment | Surface roughness Ra (µ m) (µm) | Rib thickness (µ m) (µ m) | Cell pitch (mm) | Opening ratio (%) ) | Porosity after firing (%) | Setter diameter (mm) | Setter thickness (mm) | Chamfering (R) distance of setter | Number of products which caused rib defects | Condition of product end face | Special comment |
|---|---|---|---|---|---|---|---|---|---|---|---|---|
| Example 23 | #400 | 8.1 | 550 | 1.80 | 48 | 58 | 280 | 20 | Peripheral portion | 0 | Good | The sticking between product and setter |
| Example 24 | #400 | 8.1 | 300 | 1.47 | 63 | 58 | 280 | 20 | Peripheral portion 10mm | 0 | Very good | - |
| Example 25 | #80 | 12.4 | 300 | 1.47 | 63 | 58 | 280 | 20 | Peripheral portion 10mm | 0 | Very good | - |
| Example 26 | #400 | 8.1 | 300 | 1.47 | 63 | 58 | 240 | 20 | Peripheral portion 10mm | 0 | Good | The portion of product end face not in contact with setter sagged. |
| Example 27 | #400 | 8.1 | 300 | 1.47 | 63 | 58 | 320 | 20 | Peripheral portion 10mm | 0 | Very good | The number of setting was smaller. |
| * Example 28 | #400 | 8.1 | 300 | 1.47 | 63 | 58 | 280 | 3 | Peripheral portion | 0 | Very good | - |
| * Example 29 | #400 | 8.1 | 300 | 1.47 | 63 | 58 | 280 | 60 | Peripheral portion 10mm | 0 | Very good | - |
| Example 30 | #400 | 8.1 | 300 | 1.47 | 63 | 58 | 280 | 20 | No confering | 0 | Good | The product had cell deformation at the outermost portion. |
| Example 31 | #400 | 8.1 | 300 | 1.47 | 63 | 58 | 280 | 20 | Peripheral portion 50mm | 0 | Good | The portion of product end face not in contact with setter sagged. |
| Comparative Example 6 | #1000 | 7.2 | 300 | 1.47 | 63 | 58 | 280 | 20 | Peripheral portion 10mm | 9 | Bad | The sticking between setter and product was seen in many places. |
| Comparative Example 7 | #24 | 54.1 | 300 | 1.47 | 63 | 58 | 280 | 20 | Peripheral portion 10mm | 0 | Bad | The end face of product was rough. |

In Table 4, * denotes a reference example.

### (Discussion: Examples 23-31 and Comparative Examples 6-7)

As is clear from the results of Table 4, in Example 23, the condition of the honeycomb structure (product) at the surface being in contact with the setter, i.e. its condition at lower end face was acceptable; however, the setter had a small opening ratio, its contact area with the product was large, and the sticking between the setter and the product was seen slightly.

Meanwhile, in each of Example 24 and Example 25, the condition of the honeycomb structure (product) at the surface being in contact with the setter was good. In Example 25, in particular, the surface roughness was inferior to Example 15 but there was no problem.

In Example 26, the condition of the honeycomb structure (product) at the surface being in contact with the setter, i.e. its condition at lower end face was acceptable; however, since the setter had a diameter smaller than the honeycomb structure (product), the lower end face of the honeycomb structure sagged. In Example 27, the condition of the honeycomb structure (product) at the surface being in contact with the setter, i.e. its condition at lower end face was good; however, since the setter had too large a diameter, the number of to-be-fired bodies settable in kiln was smaller, resulting in reduced productivity.

In each of reference Example 28 and reference Example 29, the condition of the honeycomb structure (product) at the surface being in contact with the setter, i.e. its condition at lower end face was good when the thickness of setter was in a range of 3 to 60 mm, and there was no problem.

In each of Example 30 and Example 31, the condition of the honeycomb structure (product) at the surface being in contact with the setter, i.e. its condition at lower end face was acceptable. However, in Example 30, since no chamfering was made for the setter, the outermost cells of the honeycomb structure (product) deformed; in Example 22, since the chamfering portion of the setter was too large and the formed honeycomb body was not in contact with the setter, the lower end face of the honeycomb structure after firing (product) sagged.

In Comparative Example 6, the surface roughness Ra of the setter was less than 8 µm; therefore, the condition of the honeycomb structure (product) at the surface being in contact with the setter, i.e. the condition of the lower end face of product was outside the allowable range, the honeycomb structure (product) showed rib cracks, and the sticking between the setter and the product was seen in many places.

In Comparative Example 7, the setter had a surface roughness Ra of larger than 50 µm; therefore, the condition of the honeycomb structure (product) at the surface being in contact with the setter, i.e. the condition of the lower end face of product was outside the allowable range, and the lower end face of the honeycomb structure (product) was rough in an extent that the roughness could be confirmed visually.

### Industrial Applicability

The setter used in firing and the method for firing of a formed honeycomb body using the setter, both of the present invention can contribute to an improvement in yield in production of a fired honeycomb body (a product).

## Claims

1. A combination of a setter (1) used in firing and a to-be-fired body (20), the setter (1) and to-be-fired body (20) both being bodies of honeycomb structure;
wherein the setter (1), when fired, forms a crystalline phase comprising the same main component as in the crystalline phase formed when the to-be-fired body (20) is fired together with the setter (1);
and **characterised in that** the setter (1) has a surface roughness Ra of 8 to 50 µm at the surface to come in contact with the to-be-fired body (20) and a thickness of 5 to 50mm.

2. A combination according to claim 1, wherein the setter (1) is constituted by a formed ceramic body of honeycomb structure having an opening ratio of 50 to 90%.

3. A combination according to claim 1 or claim 2, wherein the crystalline phase formed when the setter (1) and the to-be-fired body (20) are fired together comprises, as the main component, any of (1) cordierite 85 to 100 mass %, (2) silicon carbide 50 to 100 mass % and (3) aluminum titanate 50 to 100 mass %.

4. A combination according to any one of claims 1 to 3, wherein the setter (1) has a porosity of 20 to 70% when fired together with the to-be-fired body (20).

5. A combination according to any one of claims 1 to 4, wherein the setter (1) has a diameter equal to the diameter of the to-be-fired body (20) plus or minus 10% thereof.

6. A combination according to claim 5, wherein the setter (1) is chamfered by a distance of 3 to 30 mm at the periphery of the surface to come into contact with the to-be-fired body (20), in a direction from the periphery toward the center of the surface.

7. A combination according to claim 5 or 6, wherein the to-be-fired body (20) has a shape of 140 to 400 mm in diameter and 150 to 400 mm in height.

8. A method for firing of a formed honeycomb body comprising firing a combination as set forth in any of Claims 1 to 7, wherein the to-be-fired body (20) is the formed honeycomb body.

## Patentansprüche

1. Kombination aus beim Brennen verwendeter Ofenstütze (1) und zu brennendem Körper (20), wobei die Ofenstütze (1) und der zu brennende Körper (20) beides Körper aus einer Wabenstruktur sind;
worin die Ofenstütze (1) beim Brennen eine kristalline Phase bildet, welche die gleiche Hauptkomponente umfasst wie die kristalline Phase, die gebildet wird, wenn der zu brennende Körper (20) zusammen mit der Ofenstütze (1) gebrannt wird;
**dadurch gekennzeichnet, dass** die Ofenstütze (1) an der Oberfläche, die mit dem zu brennenden Körper (20) in Kontakt kommt, eine Oberflächenrauheit Ra von 8 bis 50 µm und eine Dicke von 5 bis 50 mm aufweist.

2. Kombination nach Anspruch 1, worin die Ofenstütze (1) aus einem Keramikformkörper mit einer Wabenstruktur mit einem Öffnungsanteil von 50 bis 90 % besteht.

3. Kombination nach Anspruch 1 oder Anspruch 2, worin die kristalline Phase, die gebildet wird, wenn die Ofenstütze (1) und der zu brennende Körper (20) zusammen gebrannt werden, als Hauptkomponente eines aus (1) 85 bis 100 Masse-% Cordierit, (2) 50 bis 100 Masse-% Siliciumcarbid und (3) 50 bis 100 Masse-% Aluminiumtitanat umfasst.

4. Kombination nach einem der Ansprüche 1 bis 3, worin die Ofenstütze (1) eine Porosität von 20 bis 70 % aufweist, wenn sie zusammen mit dem zu brennenden Körper (20) gebrannt wird.

5. Kombination nach einem der Ansprüche 1 bis 4, worin die Ofenstütze (1) einen Durchmesser aufweist, der dem Durchmesser des zu brennenden Körpers (20) plus oder minus 10 % davon entspricht.

6. Kombination nach Anspruch 5, worin die Ofenstütze (1) in einem Abstand von 3 bis 30 mm am Außenumfang der Oberfläche, die mit dem zu brennenden Körper (20) in Kontakt kommt, in eine Richtung vom Außenumfang zum Zentrum der Oberfläche hin angeschrägt ist.

7. Kombination nach Anspruch 5 oder 6, worin der zu brennende Körper (20) eine Gestalt mit einem Durchmesser von 140 bis 400 mm und einer Höhe von 150 bis 400 mm aufweist.

8. Verfahren zum Brennen eines geformten Wabenkörpers, umfassend das Brennen einer Kombination nach einem der Ansprüche 1 bis 7, worin der zu brennende Körper (20) der geformte Wabenkörper ist.

## Revendications

1. Combinaison d'une plaque de support (1) utilisée pour la cuisson et un corps à cuire (20), la plaque de support (1) et le corps à cuire (20) étant tous les deux des corps d'une structure en nid d'abeilles;
où la plaque de support (1), lorsqu'elle est cuite, forme une phase cristalline comprenant le même composant principal que dans la phase cristalline formée lorsque le corps à cuire (20) est cuit ensemble avec la plaque de support (1);
et **caractérisée en ce que** la plaque de support (1) a une rugosité de surface Ra de 8 à 50µm à la surface pour venir en contact avec le corps à cuire (20) et une épaisseur de 5 à 50mm.

2. Combinaison selon la revendication 1, où la plaque de support (1) est constituée par un corps céramique formé d'une structure en nid d'abeilles ayant un rapport d'ouverture de 50 à 90%.

3. Combinaison selon la revendication 1 ou la revendication 2, où la phase cristalline formée, lorsque la plaque de support (1) et le corps à cuire (20) sont cuits ensemble, comprend, comme composant principal, l'un parmi (1) la cordiérite en 85 à 100% de masse, (2) le carbure de silicium en 50 à 100% de masse et (3) le titanate d'aluminium en 50 à 100% de masse.

4. Combinaison selon l'une quelconque des revendications 1 à 3, où la plaque de support (1) a une porosité de 20 à 70% lorsqu'elle est cuite ensemble avec le corps à cuire (20).

5. Combinaison selon l'une quelconque des revendications 1 à 4, où la plaque de support (1) a un diamètre égal au diamètre du corps à cuire (20) plus ou moins 10% de celui-ci.

6. Combinaison selon la revendication 5, où la plaque de support (1) est chanfreinée d'une distance de 3 à 30 mm à la périphérie de la surface pour venir en contact avec le corps à cuire (20), dans une direction de la périphérie vers le centre de la surface.

7. Combinaison selon la revendication 5 ou 6, où le corps à cuire (20) a une forme de 140 à 400 mm en diamètre et de 150 à 400 mm en hauteur.

8. Procédé de cuisson d'un corps en nid d'abeilles formé comprenant la cuisson d'une combinaison telle qu'exposée dans l'une quelconque des revendications 1 à 7, où le corps à cuire (20) est le corps en nid d'abeilles formé.
